(19) Europäisches Patentamt / European Patent Office / Office européen des brevets

(11) **EP 4 670 822 A1**

(12) **EUROPEAN PATENT APPLICATION**
published in accordance with Art. 153(4) EPC

(43) Date of publication:
**31.12.2025 Bulletin 2026/01**

(21) Application number: **24760324.4**

(22) Date of filing: **19.02.2024**

(51) International Patent Classification (IPC):
**B01D 53/22** (2006.01)   **B01D 69/00** (2006.01)
**B01D 69/02** (2006.01)   **B01D 71/02** (2006.01)
**B01D 71/06** (2006.01)   **B01D 71/52** (2006.01)
**B01D 71/56** (2006.01)

(52) Cooperative Patent Classification (CPC):
**B01D 53/22; B01D 69/00; B01D 69/02;**
**B01D 71/02; B01D 71/06; B01D 71/52; B01D 71/56**

(86) International application number:
**PCT/JP2024/005870**

(87) International publication number:
**WO 2024/177026 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2023 JP 2023025343**

(71) Applicant: **Nitto Denko Corporation**
**Osaka 567-8680 (JP)**

(72) Inventor: **KATAGIRI, Makoto**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **GAS SEPARATION SYSTEM AND METHOD FOR SEPARATING MIXED GAS**

(57)     The present invention provides a new gas separation system suitable for separating a gas mixture efficiently. A gas separation system 100 of the present invention includes: a first separation membrane 11 that separates a gas mixture 70 into a first permeated gas 80 and a first non-permeated gas 81; and a second separation membrane 21 that separates the first non-permeated gas 81 into a second permeated gas 90 and a second non-permeated gas 91. The gas mixture 70 contains a gas A and a gas B different from the gas A. The first separation membrane 11 is preferentially permeable to the gas A. The second separation membrane 21 is preferentially permeable to the gas B. A separation factor $\alpha 1$ of the first separation membrane and a separation factor $\alpha 2$ of the second separation membrane satisfy the following relational expressions (1) and (2).

$$\alpha 1 / \alpha 2 \geq 1.9 \qquad (1)$$

$$\alpha 2 \leq 50 \qquad (2)$$

FIG.1

EP 4 670 822 A1

**Description**

TECHNICAL FIELD

The present invention relates to a gas separation system and a gas mixture separation method.

BACKGROUND ART

At chemical plants and the like that manufacture chemical products, for example, gas mixtures containing carbon dioxide, hydrogen, etc. are discharged. From the viewpoints of environmental regulation, effective use of resources, etc., it is desirable to separate each component from gas mixtures and recover them.

A membrane separation method has been developed as a method for separating each component from a gas mixture. The membrane separation method allows efficient separation of each component with a suppressed operation cost, compared with an absorption method according to which a specific component contained in a gas mixture is absorbed by an absorbent to be separated.

In the membrane separation method, a gas separation system including a combination of a plurality of separation membranes is used sometimes. For example,

Patent Literature 1 discloses a methane concentrating device that concentrates methane gas using two separation membranes preferentially permeable to carbon dioxide.

CITATION LIST

Patent Literature

Patent Literature 1: JP 2008-260739 A

SUMMARY OF INVENTION

Technical Problem

A new gas separation system suitable for efficiently separating a gas mixture has been demanded.

Solution to Problem

Through intensive studies, the present inventors have newly found that in the case where two separation membranes preferentially permeable to different gasses are used in combination, a gas mixture can be separated at a sufficiently high recovery rate and a sufficiently high recovery purity by adjusting separation factors $\alpha$ of the two separation membranes as appropriate even when the separation factor $\alpha$ of either of the separation membranes is as small as 50 or less (in particular, 20 or less). The present inventors made further studies on the basis of this finding and have completed the present invention.

The present invention provides a gas separation system including:

a first separation membrane that separates a gas mixture into a first permeated gas and a first non-permeated gas; and

a second separation membrane that separates the first non-permeated gas into a second permeated gas and a second non-permeated gas, wherein

the gas mixture contains a gas A and a gas B different from the gas A,

the first separation membrane is preferentially permeable to the gas A,

the second separation membrane is preferentially permeable to the gas B,

a separation factor $\alpha 1$ of the first separation membrane for the gas A with respect to the gas B and a separation factor $\alpha 2$ of the second separation membrane for the gas B with respect to the gas A satisfy the following relational expressions (1) and (2), the separation factors $\alpha 1$ and $\alpha 2$ being determined by a test below:

$$\alpha 1/\alpha 2 \geq 1.9 \qquad (1);$$

and

$$\alpha2 \leq 50 \qquad (2).$$

Test: A test piece is fabricated from the first separation membrane or the second separation membrane. An operation is performed in which a test gas composed of the gas A and the gas B is supplied to a space adjacent to one surface of the test piece while a space adjacent to the other surface of the test piece is depressurized. The separation factor $\alpha1$ or $\alpha2$ is determined on the basis of a result of the operation. In the operation, a content of the gas A in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

The present invention further provides a gas mixture separation method, including:

a first separation step of separating, by a first separation membrane preferentially permeable to a gas A, a gas mixture containing the gas A and a gas B different from the gas A into a first permeated gas and a first non-permeated gas; and
a second separation step of separating, by a second separation membrane preferentially permeable to the gas B, the first non-permeated gas into a second permeated gas and a second non-permeated gas, wherein
a separation factor $\alpha1$ of the first separation membrane for the gas A with respect to the gas B and a separation factor $\alpha2$ of the second separation membrane for the gas B with respect to the gas A satisfy the following relational expressions (1) and (2), the separation factors $\alpha1$ and $\alpha2$ being determined by a test below:

$$\alpha1/\alpha2 \geq 1.9 \qquad (1);$$

and

$$\alpha2 \leq 50 \qquad (2).$$

Test: A test piece is fabricated from the first separation membrane or the second separation membrane. An operation is performed in which a test gas composed of the gas A and the gas B is supplied to a space adjacent to one surface of the test piece while a space adjacent to the other surface of the test piece is depressurized. The separation factor $\alpha1$ or $\alpha2$ is determined on the basis of a result of the operation. In the operation, a content of the gas A in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

Advantageous Effects of Invention

According to the present invention, a new gas separation system suitable for efficiently separating a gas mixture can be provided.

BRIEF DESCRIPTION OF DRAWINGS

FIG. 1 is a schematic configuration diagram showing a gas separation system according to one embodiment of the present invention.
FIG. 2 is a schematic configuration diagram showing an example of a first separation membrane unit.
FIG. 3 is a cross-sectional view schematically showing an example of a first separation membrane.
FIG. 4 is a schematic configuration diagram showing an example of a second separation membrane unit.
FIG. 5 is a cross-sectional view schematically showing an example of a second separation membrane.
FIG. 6 is a schematic configuration diagram showing another example of the first separation membrane unit.
FIG. 7 is a schematic configuration diagram showing a modification of a gas separation system.
FIG. 8 is a configuration diagram describing a gas separation system used in Calculation Example 9.

DESCRIPTION OF EMBODIMENTS

A gas separation system according to a first embodiment of the present invention includes:

a first separation membrane that separates a gas mixture into a first permeated gas and a first non-permeated gas;

and

a second separation membrane that separates the first non-permeated gas into a second permeated gas and a second non-permeated gas, wherein

the gas mixture contains a gas A and a gas B different from the gas A,

the first separation membrane is preferentially permeable to the gas A,

the second separation membrane is preferentially permeable to the gas B,

a separation factor $\alpha 1$ of the first separation membrane for the gas A with respect to the gas B and a separation factor $\alpha 2$ of the second separation membrane for the gas B with respect to the gas A satisfy the following relational expressions (1) and (2), the separation factors $\alpha 1$ and $\alpha 2$ being determined by a test below:

$$\alpha 1/\alpha 2 \geq 1.9 \qquad (1);$$

and

$$\alpha 2 \leq 50 \qquad (2).$$

Test: A test piece is fabricated from the first separation membrane or the second separation membrane. An operation is performed in which a test gas composed of the gas A and the gas B is supplied to a space adjacent to one surface of the test piece while a space adjacent to the other surface of the test piece is depressurized. The separation factor $\alpha 1$ or $\alpha 2$ is determined on the basis of a result of the operation. In the operation, a content of the gas A in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

According to a second aspect of the present invention, for example, in the gas separation system according to the first aspect, the separation factor $\alpha 2$ is 20 or less.

According to a third aspect of the present invention, for example, in the gas separation system according to the first or second aspect, the gas A is hydrogen and the gas B is carbon dioxide.

According to a fourth aspect of the present invention, for example, the gas separation system according to any one of the first to third aspects is configured to recover each of the first permeated gas and the second permeated gas.

According to a fifth aspect of the present invention, for example, in the gas separation system according to any one of the first to fourth aspects, a membrane area of the first separation membrane is larger than a membrane area of the second separation membrane.

According to a sixth aspect of the present invention, for example, in the gas separation system according to any one of the first to fifth aspects, a content of the gas A in the first permeated gas is 85 vol% or more, and a recovery rate of the gas A by the first permeated gas is 70 wt% or more.

According to a seventh aspect of the present invention, for example, in the gas separation system according to any one of the first to sixth aspects, a content of the gas B in the second permeated gas is 85 vol% or more, and a recovery rate of the gas B by the second permeated gas is 80 wt% or more.

According to an eighth aspect of the present invention, for example, in the gas separation system according to any one of the first to seventh aspects, a ratio of a volume of the gas A to a sum of the volume of the gas A and a volume of the gas B in the gas mixture is 20 to 80 vol%.

According to a ninth aspect of the present invention, for example, the gas separation system according to any one of the first to eighth aspects further includes: a first separation membrane unit accommodating the first separation membrane; a gas mixture feed passage connected to the first separation membrane unit and configured to supply the gas mixture to the first separation membrane unit; and a pressurizing device provided to the gas mixture feed passage and configured to increase a pressure of the gas mixture.

According to a tenth aspect of the present invention, for example, the gas separation system according to any one of the first to ninth aspects further includes: a first separation membrane unit accommodating the first separation membrane; a first recovery portion that recovers the first permeated gas; and a first recovery passage connected to the first separation membrane unit and the first recovery portion and configured to deliver the first permeated gas to the first recovery portion.

According to an eleventh aspect of the present invention, for example, the gas separation system according to the tenth aspect further includes: a second separation membrane unit accommodating the second separation membrane; and a discharge passage connected to the second separation membrane unit and configured to discharge the second non-permeated gas from the second separation membrane unit, wherein the discharge passage joins the first recovery passage at a joining point.

According to a twelfth aspect of the present invention, for example, the gas separation system according to any one of the first to eleventh aspects further includes: a second separation membrane unit accommodating the second separation membrane; a second recovery portion that recovers the second permeated gas; and a second recovery passage connected to the second separation membrane unit and the second recovery portion and configured to deliver the second permeated gas to the second recovery portion.

According to a thirteenth aspect of the present invention, for example, in the gas separation system according to any one of the first to twelfth aspects, the first separation membrane includes a resin layer including a resin or a metal layer including a metal as a separation functional layer.

According to a fourteenth aspect of the present invention, for example, in the gas separation system according to any one of the first to thirteenth aspects, the second separation membrane includes a separation functional layer including: a polyether block amide resin; or an ionic liquid.

A gas mixture separation method according to a fifteenth aspect of the present invention includes:

a first separation step of separating, by a first separation membrane preferentially permeable to a gas A, a gas mixture containing the gas A and a gas B different from the gas A into a first permeated gas and a first non-permeated gas; and a second separation step of separating, by a second separation membrane preferentially permeable to the gas B, the first non-permeated gas into a second permeated gas and a second non-permeated gas, wherein a separation factor $\alpha1$ of the first separation membrane for the gas A with respect to the gas B and a separation factor $\alpha2$ of the second separation membrane for the gas B with respect to the gas A satisfy the following relational expressions (1) and (2), the separation factors $\alpha1$ and $\alpha2$ being determined by a test below:

$$\alpha1/\alpha2 \geq 1.9 \qquad (1);$$

and

$$\alpha2 \leq 50 \qquad (2).$$

Test: A test piece is fabricated from the first separation membrane or the second separation membrane. An operation is performed in which a test gas composed of the gas A and the gas B is supplied to a space adjacent to one surface of the test piece while a space adjacent to the other surface of the test piece is depressurized. The separation factor $\alpha1$ or $\alpha2$ is determined on the basis of a result of the operation. In the operation, a content of the gas A in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

The present invention will be described below in detail. The following description is not intended to limit the present invention to a specific embodiment.

<Gas Separation System>

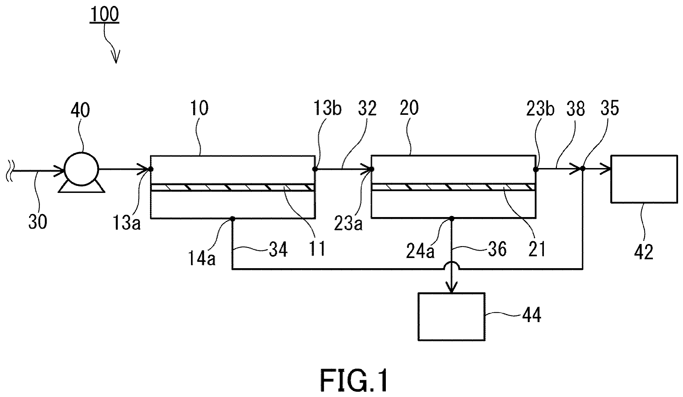

As shown in FIG. 1, a gas separation system 100 of the present embodiment includes a first separation membrane 11 and a second separation membrane 21. Specifically, the gas separation system 100 includes a first separation membrane unit 10 accommodating the first separation membrane 11 and a second separation membrane unit 20 accommodating the second separation membrane 21. The first separation membrane unit 10 is a membrane separation device that separates a gas mixture using the first separation membrane 11. The first separation membrane 11 can separate the gas mixture into a first permeated gas and a first non-permeated gas. The second separation membrane unit 20 is a membrane separation device that separates, using the second separation membrane 21, the first non-permeated gas discharged from the first separation membrane unit 10. The second separation membrane 21 can separate the first non-permeated gas into a second permeated gas and a second non-permeated gas.

The gas mixture to be processed in the first separation membrane unit 10 contains a gas A and a gas B different from the gas A. Examples of the gas A and the gas B include hydrogen and carbon dioxide. In one example, the gas A is hydrogen and the gas B is carbon dioxide. In another case, the gas A may be carbon dioxide and the gas B may be hydrogen.

The first separation membrane 11 is preferentially permeable to the gas A. Therefore, the first permeated gas separated by the first separation membrane 11 has a content of the gas A higher than that in the gas mixture and a content of the gas B lower than that in the gas mixture. In contrast, the first non-permeated gas has a content of the gas A lower than that in the gas mixture and a content of the gas B higher than that in the gas mixture.

The second separation membrane 21 is preferentially permeable to the gas B. Therefore, the second permeated gas separated by the second separation membrane 21 has a content of the gas B higher than that in the first non-permeated gas and a content of the gas A lower than that in the first non-permeated gas. In contrast, the second non-permeated gas has a content of the gas B lower than that in the first non-permeated gas and a content of the gas A higher than that in the first non-permeated gas.

In the gas separation system 100, a separation factor $\alpha 1$ of the first separation membrane 11 for the gas A with respect to the gas B and a separation factor $\alpha 2$ of the second separation membrane 21 for the gas B with respect to the gas A satisfy the following relational expressions (1) and (2), the separation factors $\alpha 1$ and $\alpha 2$ being determined by a test below:

$$\alpha 1/\alpha 2 \geq 1.9 \qquad (1);$$

and

$$\alpha 2 \leq 50 \qquad (2).$$

Test: A test piece is fabricated from the first separation membrane 11 or the second separation membrane 21. An operation (separation operation) is performed in which a test gas composed of the gas A and the gas B is supplied to a space adjacent to one surface of the test piece while a space adjacent to the other surface of the test piece is depressurized. The separation factor $\alpha 1$ or $\alpha 2$ is determined on the basis of a result of the separation operation. In the separation operation, a content of the gas A in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

In the above test, the test piece can be fabricated, for example, by cutting the first separation membrane 11 or the second separation membrane 21 into a disc having a diameter of 20 mm. The discoid test piece may have a diameter of 20 mm or more.

The separation operation of the above test can be performed, for example, by the following method. First, the test piece is set in a metal cell, which is then sealed with an O-ring so that no leakage will occur. The test gas is injected into a space (feed space) in the metal cell to have contact with one principal surface (e.g., a principal surface 11a or 21a described later) of the test piece. As described above, the content of the gas A in the test gas to be injected into the feed space is 50 vol% under the standard conditions (0°C, 101 kPa). The test gas has a temperature of 30°C and a pressure of 0.1 MPa. In the present description, the term "pressure" refers to the absolute pressure, unless otherwise described.

Next, a space (permeation space) in the metal cell is depressurized using a vacuum pump, the space being adjacent to the other principal surface (e.g., a principal surface 11b or 21b described later) of the test piece. In this process, the permeation space is depressurized to reduce the pressure in the space to 0.1 MPa below the atmospheric pressure in the measurement environment. As a result, a permeated fluid having permeated through the test piece is obtained in the permeation space. The separation factor $\alpha$ of the test piece can be calculated from a weight of the permeated fluid, a volume rate of the gas A and that of the gas B in the permeated fluid, etc. Specifically, the separation factor $\alpha 1$ (the gas A/the gas B) of the first separation membrane 11 can be calculated by performing the above separation operation using a test piece fabricated from the first separation membrane 11, and the separation factor $\alpha 2$ (the gas B/the gas A) of the second separation membrane 21 can be calculated by performing the above separation operation using a test piece fabricated from the second separation membrane 21.

Specifically, the separation factor $\alpha$ can be calculated by the following equation. When the separation factor $\alpha 1$ (the gas A/the gas B) of the first separation membrane 11 is calculated, in the following equation, $X_A$ and $X_B$ are respectively a volume rate of the gas A and a volume rate of the gas B in the test gas, and $Y_A$ and $Y_B$ are respectively the volume rate of the gas A and the volume rate of the gas B in the permeated fluid having permeated through the test piece. On the other hand, when the separation factor $\alpha 2$ (the gas B/the gas A) of the second separation membrane 21 is calculated, in the following equation, $X_A$ and $X_B$ are respectively the volume rate of the gas B and the volume rate of the gas A in the test gas, and $Y_A$ and $Y_B$ are respectively the volume rate of the gas B and the volume rate of the gas A in the permeated fluid having permeated through the test piece. These volume rates are values under the standard conditions (0°C, 101 kPa).

$$\text{Separation factor } \alpha = (Y_A/Y_B)/(X_A/X_B)$$

The gas separation system 100 satisfying the relational expression (1) ($\alpha 1/\alpha 2 \geq 1.9$) tends to be able to separate the gas mixture at a sufficiently high recovery rate and a sufficiently high recovery purity even when the separation factor $\alpha 2$ of the second separation membrane 21 is as small as 50 or less (particularly, 20 or less). It tends to be difficult to adjust the separation factor for carbon dioxide to a high value in the case of, particularly, a separation membrane preferentially permeable to carbon dioxide. When a separation membrane preferentially permeable to carbon dioxide is adopted as the second separation membrane 21, the gas separation system 100 tends to be able to separate the gas mixture at a sufficiently high recovery rate and a sufficiently high recovery purity without adjusting the separation factor of the separation membrane to a high value.

The ratio ($\alpha1/\alpha2$) of the separation factor $\alpha1$ to the separation factor $\alpha2$ may be 2.0 or more, 2.3 or more, 2.5 or more, 2.8 or more, 3.0 or more, 3.5 or more, or even 4.0 or more. The upper limit of the ratio ($\alpha1/\alpha2$) is, for example, but not particularly limited to, 10.0 or less, and may be 8.0 or less.

The separation factor $\alpha1$ of the first separation membrane 11 is not limited to a particular one as long as the above relational expression (1) is satisfied. The separation factor $\alpha1$ of the first separation membrane 11 is, for example, 5 or more, and may be 10 or more, 15 or more, 20 or more, 25 or more, 30 or more, 40 or more, 50 or more, 60 or more, 70 or more, or even 80 or more. The upper limit of the separation factor $\alpha1$ is, for example, 200 or less, and may be 150 or less, or 100 or less.

The separation factor $\alpha2$ of the second separation membrane 21 is not limited to a particular one as long as the above relational expressions (1) and (2) are satisfied. The separation factor $\alpha2$ of the second separation membrane 21 is, for example, 40 or less, and may be 30 or less, 25 or less, 20 or less, 15 or less, or even 10 or less. The lower limit of the separation factor $\alpha2$ is, for example, more than 1, 2 or more, 3 or more, 4 or more, or even 5 or more.

A permeation rate T1 of the gas A permeating through the first separation membrane 11 is, for example, but not particularly limited to, 1 GPU or more, and may be 5 GPU or more, 10 GPU or more, 50 GPU or more, or even 100 GPU or more. The upper limit of the permeation rate T1 is, for example, but not particularly limited to, 1000 GPU or less. GPU refers to $10^{-6} \cdot cm^3$ (STP)/(sec$\cdot$cm$^2 \cdot$cmHg). The symbol "cm$^3$ (STP)" means the volume of a gas at 1 atmospheric pressure and 0°C. The permeation rate T1 can be calculated from the result of the above separation operation using a test piece fabricated from the first separation membrane 11.

A permeation rate T2 of the gas B permeating through the second separation membrane 21 is, for example, but not particularly limited to, 1 GPU or more, and may be 5 GPU or more, 10 GPU or more, 50 GPU or more, or even 100 GPU or more. The upper limit of the permeation rate T2 is, for example, but not particularly limited to, 1000 GPU or less. The permeation rate T2 can be calculated from the result of the above separation operation using a test piece fabricated from the second separation membrane 21.

The gas separation system 100 of the present embodiment further includes a gas mixture feed passage 30. The gas mixture feed passage 30 is a passage connected to a gas mixture inlet (an inlet 13a) of the first separation membrane unit 10 and configured to supply the gas mixture to the first separation membrane unit 10 from, for example, a tank (not shown) storing the gas mixture. The gas mixture feed passage 30 may be connected directly to a source of the gas mixture and may be configured to supply continuously the gas mixture to the first separation membrane unit 10 from the source. The gas mixture feed passage 30 is provided, for example, with a pressurizing device 40 that increases a pressure of the gas mixture. Examples of the pressurizing device 40 include a compressor, a blower, and a back pressure valve. The pressurizing device 40 can pressurize a feed-side space of the first separation membrane unit 10 by increasing the pressure of the gas mixture.

The gas mixture feed passage 30 may be provided with a heat exchanger (not shown) between the pressurizing device 40 and the first separation membrane unit 10. The heat exchanger cools the gas mixture whose pressure has been increased by the pressurizing device 40, for example. The heat exchanger is, for example, a gas-liquid heat exchanger that causes heat exchange between a cooling medium, such as an antifreeze, and the gas mixture, and is typically a fin tube heat exchanger.

The gas separation system 100 further includes a non-permeated gas feed passage 32. The non-permeated gas feed passage 32 is a passage connected to a non-permeated gas outlet (an outlet 13b) of the first separation membrane unit 10 and a non-permeated gas inlet (an inlet 23a) of the second separation membrane unit 20, and configured to supply the first non-permeated gas from the first separation membrane unit 10 to the second separation membrane unit 20. The non-permeated gas feed passage 32 is not necessarily provided with a tank, such as a collector that collects the first non-permeated gas, or an opening and closing valve that opens and closes the passage. Such a configuration makes it possible to supply continuously the first non-permeated gas discharged from the first separation membrane unit 10 to the second separation membrane unit 20, and to easily increase an amount of the gas mixture to be processed per unit time. In one example, the non-permeated gas feed passage 32 may be composed only of a pipe.

The gas separation system 100 further includes a first recovery passage 34 and a first recovery portion 42. The first recovery passage 34 is a passage connected to a permeated gas outlet (an outlet 14a) of the first separation membrane unit 10 and an inlet of the first recovery portion 42, and configured to deliver the first permeated gas from the first separation membrane unit 10 to the first recovery portion 42. The first recovery portion 42 recovers the first permeated gas delivered from the first separation membrane unit 10 and can, for example, store the first permeated gas. The first recovery portion 42 is, for example, a tank that stores the first permeated gas.

The gas separation system 100 further includes a second recovery passage 36 and a second recovery portion 44. The second recovery passage 36 is a passage connected to a permeated gas outlet (an outlet 24a) of the second separation membrane unit 20 and an inlet of the second recovery portion 44, and configured to deliver the second permeated gas from the second separation membrane unit 20 to the second recovery portion 44. The second recovery portion 44 recovers the second permeated gas delivered from the second separation membrane unit 20 and can, for example, store the second permeated gas. The second recovery portion 44 is, for example, a tank that stores the second permeated gas.

The gas separation system 100 further includes a discharge passage 38. The discharge passage 38 is a passage connected to a non-permeated gas outlet (an outlet 23b) of the second separation membrane unit 20 and configured to discharge the second non-permeated gas from the second separation membrane unit 20. The discharge passage 38 joins, for example, the first recovery passage 34 at a joining point 35. Since the discharge passage 38 joins the first recovery passage 34, the first permeated gas and the second non-permeated gas can be mixed in the first recovery passage 34. This tends to allow a further increase of the recovery rate for the gas A without greatly decreasing the recovery purity. In the gas separation system 100, in the case where the gas mixture supplied to the first separation membrane unit 10 has a high pressure, the second non-permeated gas tends to have a high pressure, too. By mixing the first permeated gas and the high-pressure second non-permeated gas, a gas (recovered gas) having a higher pressure than the pressure of the first permeated gas can be obtained.

The discharge passage 38 does not necessarily join the first recovery passage 34. The discharge passage 38 may be connected directly to the first recovery portion 42. The discharge passage 38 may be provided with a depressurizing device and a heat exchanger (not shown). The depressurizing device can depressurize, for example, the second non-permeated gas to an atmospheric pressure (101 kPa, for example) in an external environment. Examples of the depressurizing device include a depressurizing valve. The heat exchanger is positioned between the depressurizing device and the joining point 35, for example. The heat exchanger heats, for example, the second non-permeated gas depressurized by the depressurizing device. The heat exchanger is, for example, a gas-liquid heat exchanger that causes heat exchange between a heat medium, such as hot water, and the second non-permeated gas, and is typically a fin tube heat exchanger.

Each passage of the gas separation system 100 is formed of, for example, a metal or resin pipe unless otherwise noted.

The gas separation system 100 may further include a controller (not shown) that controls each member of the gas separation system 100. The controller is, for example, a digital signal processor (DSP) including an A/D conversion circuit, an input/output circuit, an arithmetic circuit, a storage device, etc. A program for operating properly the gas separation system 100 is stored in the controller.

The gas separation system 100 of the present embodiment is a continuous-type system, for example. In the present description, the continuous-type system means a system that can process the gas mixture continuously without closing, by using, for example, an opening and closing valve, the passages included in the gas separation system 100. In other words, the gas separation system 100 can process the gas mixture in the first separation membrane unit 10 as well as process immediately, in the second separation membrane unit 20, the first non-permeated gas obtained in the first separation membrane unit 10 without collecting the first non-permeated gas into, for example, a tank. As just described above, the gas separation system 100 of the present embodiment can be operated continuously. The gas separation system 100 that functions as a continuous-type system is suitable for applications in which a gas mixture is supplied continuously, for processing of an emission gas, and the like.

[First Separation Membrane Unit]

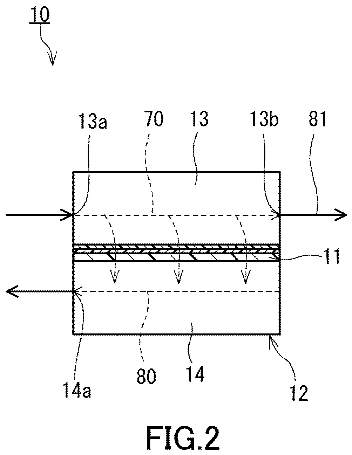

As shown in FIG. 2, the first separation membrane unit 10 includes the first separation membrane 11 and a tank 12. The tank 12 has a first chamber 13 and a second chamber 14. A space in the first chamber 13 corresponds to a feed-side space and a space in the second chamber 14 corresponds to a permeation-side space. The first separation membrane 11 is disposed in the tank 12. In the tank 12, the first separation membrane 11 separates the first chamber 13 and the second chamber 14 from each other. The first separation membrane 11 extends from one of a pair of wall surfaces of the tank 12 to the other.

The first chamber 13 has the inlet 13a and the outlet 13b. The second chamber 14 has the outlet 14a. The inlet 13a of the first chamber 13 is an opening for supplying a gas mixture 70 to the first separation membrane unit 10. The outlet 14a of the second chamber 14 is an opening for discharging, from the first separation membrane unit 10, a first permeated gas 80 obtained by allowing the gas mixture 70 to permeate through the first separation membrane 11. The outlet 13b of the first chamber 13 is an opening for discharging, from the first separation membrane unit 10, the gas mixture 70 (a first non-permeated gas 81) not having permeated through the first separation membrane 11. The inlet 13a, the outlet 13b, and the outlet 14a are provided, for example, in wall surfaces of the tank 12.

(First Separation Membrane)

In the gas separation system 100 of the present embodiment, a membrane area M1 of the first separation membrane 11 is preferably larger than a membrane area M2 of the second separation membrane 21. A ratio M1/M2 of the membrane area M1 of the first separation membrane 11 to the membrane area M2 of the second separation membrane 21 is, for example, more than 1.0, and may be 1.3 or more, 1.5 or more, 1.8 or more, or even 2.0 or more. The upper limit of the ratio M1/M2 is, for example, but not particularly limited to, 10 or less, and may be 5.0 or less.

As described above, the first separation membrane 11 is preferentially permeable to the gas A contained in the gas mixture 70. Hereinafter, the first separation membrane 11 in the case where the gas A is hydrogen, that is, the first separation membrane 11 preferentially permeable to hydrogen, will be described. In the present description, a separation membrane preferentially permeable to hydrogen may be referred to as a "hydrogen permeable membrane". The first separation membrane 11 may be a separation membrane (e.g., a carbon dioxide permeable membrane described later) other than a hydrogen permeable membrane.

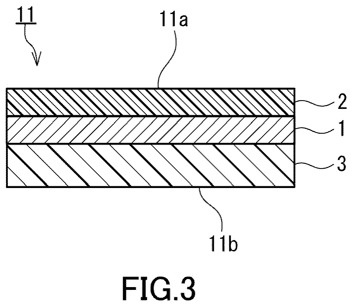

As shown in FIG. 3, the first separation membrane 11 as a hydrogen permeable membrane includes, for example, a separation functional layer 1. Examples of the separation functional layer 1 include a resin layer including a resin and a metal layer including a metal. In other words, the first separation membrane 11 includes a resin layer including a resin or a metal layer including a metal as the separation functional layer 1. The first separation membrane 11 may further include a support member 3 supporting the separation functional layer 1 and a coat layer 2 coating the separation functional layer 1. For example, the separation functional layer 1 is disposed between the coat layer 2 and the support member 3, and is in direct contact with each of the coat layer 2 and the support member 3. Note that an adhesive may be disposed between the separation functional layer 1 and the support member 3. Another support member may further be disposed between the separation functional layer 1 and the coat layer 2. The first separation membrane 11 has a principal surface 11a on the coat layer 2 side and a principal surface 11b on the support 3 side.

<<Separation Functional Layer>>

The separation functional layer 1 is a layer preferentially permeable to hydrogen. When the separation functional layer 1 is the resin layer, examples of the resin included in the resin layer include a polyamide resin and a polyimide resin. It is preferable that the resin layer substantially consist of the resin. In the present description, the phrase "substantially consisting of" a material means that other components that would alter essential characteristics of the material are excluded, and that the material accounts for, for example, 95 wt% or more, or even 99 wt% or more.

When the separation functional layer 1 is the metal layer, the metal included in the metal layer is not limited to a particular one as long as the metal itself or an alloy of the metal has a function of allowing hydrogen to permeate therethrough. Examples of the metal include Pd, Nb, V, Ta, Ni, Fe, Al, Cu, Ru, Re, Rh, Au, Pt, Ag, Cr, Co, Sn, Zr, Y, Ce, Ti, Ir, Mo, and an alloy including two or more of these metals.

The metal layer is preferably an alloy layer including a Pd alloy. Another metal forming the Pd alloy is not limited to a particular one, and is preferably an element in Group 11, and more preferably at least one selected from the group consisting of Au, Ag, and Cu. The metal layer preferably includes a Pd-Au alloy. A content of the element in Group 11 in the Pd alloy is preferably 20 to 65 mol%, more preferably 30 to 65 mol%, still more preferably 30 to 60 mol%, and particularly preferably 40 to 60 mol%. An alloy layer including a Pd-Ag alloy having an Ag content of 20 mol% or more, a Pd-Cu alloy having a Cu content of 30 mol% or more, or a Pd-Au alloy having an Au content of 20 mol% or more is less likely to be embrittled by hydrogen even in a low temperature range of approximately 60°C or lower. The Pd alloy may include a metal in Group IB and/or a metal in Group IIIA.

The Pd alloy may be an alloy composed of three or more components instead of the above-mentioned alloy composed of two components. Examples of the alloy composed of three or more components include Pd-Au-Ag, Pd-Au-Cu, and Pd-Au-Ag-Cu. For example, in the case of a multicomponent alloy including Pd, Au, and an additional metal(s), the total content of Au and the additional metal(s) in the alloy is preferably 55 mol% or less, more preferably 50 mol% or less, still more preferably 45 mol% or less, and particularly preferably 40 mol% or less.

The metal layer substantially consists of a metal, for example.

The metal layer can be produced by a method such as a rolling method, a sputtering method, a vacuum deposition method, an ion plating method, or a plating method. The rolling method is suitable for producing the metal layer that is relatively thick. The sputtering method is suitable for producing the metal layer that is relatively thin.

The rolling method may be hot rolling or cold rolling. The rolling method is a method in which a metal is stretched into a membranous shape by applying a pressure to the metal using one or more pairs of rolls. A thickness of the metal layer obtained by the rolling method is preferably 5 to 50 $\mu$m, and more preferably 10 to 30 $\mu$m. When the thickness of the metal layer is 5 $\mu$m or more, it is possible to suppress occurrence of pinholes or cracks during the production, and also to suppress deformation when hydrogen is occluded. When the thickness of the metal layer is 50 $\mu$m or less, it is possible to ensure sufficient hydrogen permeability of the metal layer while suppressing the production cost of the metal layer.

The sputtering method can be performed in the following manner using a sputtering apparatus of, for example, parallel plate type, single wafer type, pass-through type, DC sputtering, RF sputtering, or the like. First, a substrate is set in a sputtering apparatus in which a metal target is placed. Next, an inside of the sputtering apparatus is evacuated and an Ar gas pressure is adjusted to a specified value. A predetermined sputtering current is applied to the metal target to form a metal membrane on the substrate. The metal membrane is peeled off from the substrate to obtain the metal layer. As the metal target, one target or two or more targets can be used depending on the composition of the metal layer to be produced. Examples of the substrate used in the sputtering method include a glass plate, a ceramic plate, a silicon wafer, and a metal plate including aluminum, stainless steel, or the like. According to the sputtering method, it is also possible to form the metal layer directly on the support member 3.

A thickness of the metal layer obtained by the sputtering method is preferably 0.01 to 5 $\mu$m, and more preferably 0.05 to 2 $\mu$m. When the thickness of the metal layer is 0.01 $\mu$m or more, it is possible to suppress occurrence of pinholes during the production and to obtain sufficient mechanical strength. Moreover, when the thickness of the metal layer is 0.01 $\mu$m or more, the metal layer is less likely to be damaged when being peeled off from the substrate and tends to be easy to handle after peeling. When the thickness of the metal layer is 5 $\mu$m or less, it is possible to produce the metal layer in a short time and to suppress the production cost.

<<Coat Layer>>

A material of the coat layer 2 is not limited to a particular one, and examples thereof include a fluorine-based compound, a rubber-based polymer, a silicone-based polymer, a urethane-based polymer, and a polyester-based polymer. Preferred is at least one selected from the group consisting of a fluorine-based compound, a rubber-based polymer, and a silicone-based polymer.

Examples of the fluorine-based compound include: a fluoroalkyl group-containing compound such as fluoroalkyl carboxylate, fluoroalkyl quaternary ammonium salt, or a fluoroalkyl ethylene oxide adduct; a perfluoroalkyl group-containing compound such as perfluoroalkyl carboxylate, perfluoroalkyl quaternary ammonium salt, or a perfluoroalkyl ethylene oxide adduct; a fluorine-based polymer such as a tetrafluoroethylene/hexafluoropropylene copolymer, a tetrafluoroethylene/perfluoroalkyl vinyl ether copolymer, a tetrafluoroethylene polymer, a vinylidene fluoride/tetrafluoroethylene copolymer, a vinylidene fluoride/hexafluoropropylene copolymer, a fluorine-containing (meth)acrylic ester polymer, a fluorine-containing (meth)acrylic acid alkyl ester polymer, or a copolymer of a fluorine-containing (meth)acrylic ester and another monomer; and a fluorine-containing (meth)acrylic ester. As the fluorine-based compound, "DURASURF" series available from Harves Co., Ltd., "OPTOOL" series available from DAIKIN INDUSTRIES, LTD., "KY-100" series available from Shin-Etsu Chemical Co., Ltd., or the like may be used.

Examples of the rubber-based polymer include natural rubber, styrene-butadiene rubber, acrylonitrile-butadiene rubber, polychloroprene rubber, polyisoprene rubber, polybutadiene rubber, ethylene propylene rubber, ethylene-propylene-diene terpolymer rubber, chlorosulphonated polyethylene rubber, and ethylene-vinyl acetate copolymer rubber. As the rubber-based polymer, for example, "ELEP COAT" series available from Nitto Shinko Corporation may be used.

Examples of the silicone-based polymer include polydimethylsiloxane, alkyl-modified polydimethylsiloxane, carboxyl-modified polydimethylsiloxane, amino-modified polydimethylsiloxane, epoxy-modified polydimethylsiloxane, fluorine-modified polydimethylsiloxane, and (meth)acrylate-modified polydimethylsiloxane.

The coat layer 2 can be formed by, for example, applying a composition including the material of the coat layer 2 onto the separation functional layer 1 and curing the composition. The method for applying the composition is not limited to a particular method, and examples thereof include a roll coating method, a spin coating method, a dip coating method, a spray coating method, a bar coating method, a knife coating method, a die coating method, an ink jet method, and a gravure coating method.

A solvent included in the composition can be suitably selected depending on the starting material of the coat layer 2. When the fluorine-based compound is used as the material of the coat layer 2, one solvent or a combination of two or more solvents selected from, for example, a fluorine-based solvent, an alcohol-based solvent, an ether-based solvent, an ester-based solvent, and a hydrocarbon-based solvent can be used as the solvent. Among these solvents, a fluorine-based solvent that is non-flammable and evaporates quickly is preferably used alone or in combination with another solvent.

Examples of the fluorine-based solvent include hydrofluoroether, perfluoropolyether, perfluoroalkane, hydrofluoropolyether, hydrofluorocarbon, perfluorocycloether, perfluorocycloalkane, hydrofluorocycloalkane, xylenehexafluoride, hydrofluorochlorocarbon, and perfluorocarbon.

A thickness of the coat layer 2 is not limited to a particular value, and is preferably 0.1 $\mu$m or more, more preferably 0.3 $\mu$m or more, still more preferably 0.5 $\mu$m or more, and particularly preferably 1.0 $\mu$m or more. The thickness of the coat layer 2 is, for example, 80 $\mu$m or less, preferably 50 $\mu$m or less, more preferably 30 $\mu$m or less, still more preferably 20 $\mu$m or less, particularly preferably 10 $\mu$m or less, and especially preferably 5 $\mu$m or less. The thickness of the coat layer 2 can be adjusted by a solid content concentration in the composition including the material of the coat layer 2 and the number of applications of the composition. The coat layer 2 is preferably nonporous.

<<Support Member>>

The support member 3 is not limited to a particular one as long as it has hydrogen permeability and supports the separation functional layer 1. The support member 3 is a porous body, for example. The support member 3 may be nonporous. The support member 3 may be formed of a woven fabric, a nonwoven fabric, or the like. Examples of a material of the support member 3 include: polyolefin such as polyethylene or polypropylene; polyester such as polyethylene terephthalate or polyethylene naphthalate; polyarylethersulfone such as polysulfone or polyethersulfone; a fluororesin such as polytetrafluoroethylene or polyvinylidene fluoride; an epoxy resin; polyamide; and polyimide. Preferred is polysulfone or polytetrafluoroethylene, each being chemically and thermally stable.

The support member 3 is preferably a porous body having an average pore diameter of 100 $\mu$m or less. Having sufficient surface smoothness, this porous body makes it possible to easily form the metal layer with a uniform thickness when the metal layer is formed directly on the porous body by the sputtering method or the like. Here, it is also possible to suppress occurrence of pinholes or cracks in the metal layer. A thickness of the support member 3 is, for example, but not particularly limited to, 5 to 1000 $\mu$m, and preferably 10 to 300 $\mu$m.

<<Shape of First Separation Membrane>>

In the present embodiment, the first separation membrane 11 is typically a flat membrane. However, the first separation membrane 11 may have a shape other than a flat membrane, and may be, for example, a hollow fiber membrane.

[Second Separation Membrane Unit]

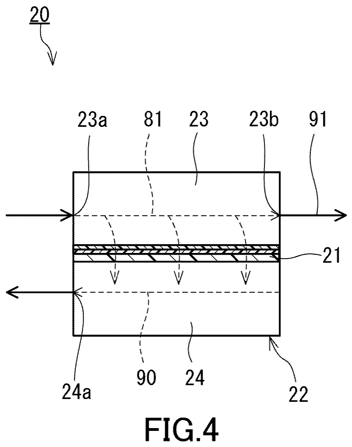

As shown in FIG. 4, the second separation membrane unit 20 includes the second separation membrane 21 and a tank 22. The tank 22 has a third chamber 23 and a fourth chamber 24. A space in the third chamber 23 corresponds to a feed-side space and a space in the fourth chamber 24 corresponds to a permeation-side space. The second separation membrane 21 is disposed in the tank 22. In the tank 22, the second separation membrane 21 separates the third chamber 23 and the fourth chamber 24 from each other. The second separation membrane 21 extends from one of a pair of wall surfaces of the tank 22 to the other.

The third chamber 23 has the inlet 23a and the outlet 23b. The fourth chamber 24 has the outlet 24a. The inlet 23a of the third chamber 23 is an opening for providing the first non-permeated gas 81 to the second separation membrane unit 20. The outlet 24a of the fourth chamber 24 is an opening for discharging, from the second separation membrane unit 20, a second permeated gas 90 obtained by allowing the first non-permeated gas 81 to permeate through the second separation membrane 21. The outlet 23b of the third chamber 23 is an opening for discharging, from the second separation membrane unit 20, the first non-permeated gas 81 (a second non-permeated gas 91) not having permeated through the second separation membrane 21. The inlet 23a, the outlet 23b, and the outlet 24a are provided, for example, in wall surfaces of the tank 22.

(Second Separation Membrane)

As described above, the second separation membrane 21 is preferentially permeable to the gas B contained in the first non-permeated gas 81. Hereinafter, the second separation membrane 21 in the case where the gas B is carbon dioxide, that is, the second separation membrane 21 preferentially permeable to carbon dioxide, will be described. In the present description, a separation membrane preferentially permeable to carbon dioxide may be referred to as a "carbon dioxide permeable membrane". The second separation membrane 21 may be a separation membrane (e.g., a hydrogen permeable membrane as described above) other than a carbon dioxide permeable membrane.

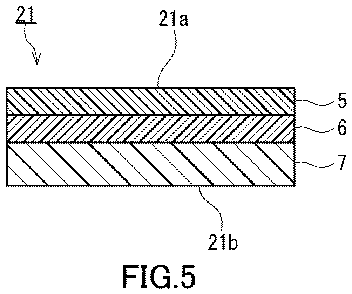

As shown in FIG. 5, the second separation membrane 21 as a carbon dioxide permeable membrane includes a separation functional layer 5, for example. The second separation membrane 21 may further include a porous support member 7 supporting the separation functional layer 5, and an intermediate layer 6 disposed between the separation functional layer 5 and the porous support member 7. The intermediate layer 6 is in direct contact with each of the separation functional layer 5 and the porous support member 7, for example. The second separation membrane 21 has a principal surface 21a on the separation functional layer 5 side and a principal surface 21b on the porous support member 7 side.

<<Separation Functional Layer>>

The separation functional layer 5 is a layer preferentially permeable to carbon dioxide. In a preferred embodiment, the separation functional layer 5 includes a resin. Examples of the resin included in the separation functional layer 5 include a polyether block amide resin, a polyamide resin, a polyether resin, a polyimide resin, a cellulose acetate resin, a silicone resin, and a fluorine resin. The separation functional layer 5 preferably includes a polyether block amide resin. In this embodiment, it is preferable that the separation functional layer 5 substantially consist of a resin.

In another preferred embodiment, the separation functional layer 5 includes an ionic liquid. The ionic liquid is a salt (an ionic compound) that is liquid at 25°C. As described above, in the second separation membrane 21, the separation functional layer 5 may include a polyether block amide resin or an ionic liquid.

The separation functional layer 5 may include a double-network gel including an ionic liquid. The double-network gel is a gel including two types of network structures independent from each other. The double-network gel includes, for example, a first network structure composed mainly of an organic material, a second network structure composed mainly of an inorganic material, and an ionic liquid. The second network structure may be composed mainly of an organic material different from the organic material of the first network structure. In the present description, the phrase "composed mainly of" a material means that the material constitutes 50 wt% or more or even 70 wt% or more.

The organic material constituting the first network structure includes, for example, a polymer such as polyacrylamide (particularly, polydialkylacrylamide such as polydimethylacrylamide). The polymer included in the organic material may have a structural unit derived from an acrylamide derivative and may further include a cross-linked structure. The polymer including a cross-linked structure can be produced by a known method. For example, first, a prepolymer having a structural unit having an N-hydroxysuccinimide ester group is prepared. The structural unit having an N-hydroxysuccinimide ester group derives from N-acryloxysuccinimide, for example. Next, the prepolymer is allowed to react with an amine cross linking agent to obtain a polymer including a cross-linked structure. The amine cross linking agent is a compound, such as ethylene glycol bis(3-aminopropyl) ether, having two or more primary amino groups.

The second network structure may include a network of particles. The network of particles are formed by, for example, a plurality of particles being bonded to each other by a hydrogen bond. The particles included in the second network structure may be particles mentioned as examples of the nanoparticles described later. In an example, the particles included in the second network structure are silica particles.

In the present embodiment, specific examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms. These may be each further substituted by a hydroxy group, a cyano group, an amino group, a monovalent ether group, or the like (such as a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

A compound having imidazolium and the substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, preferred are bis(fluorosulfonyl)imide, bis(trifluoromethanesulfonyl)imide, dicyanamide, tricyanomethanide, and tetracyanoborate.

Specific examples of the ionic liquid having imidazolium and the substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

Among these, from the viewpoint of gas separation performance, particularly preferred are 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-ethyl-3-methylimidazolium tetracyanoborate ([EMI][TCB]), 1-butyl-3-methylimidazolium bis(trifluoromethanesulfonyl)imide ([C$_4$mim][TF$_2$N]), and 1-(2-hydroxyethyl)-3-methylimidazolium bis(trifluoromethanesulfonyl)imide ([C$_2$OHim][TF$_2$N]).

The method for producing the double-network gel is not limited to a particular method, and the method disclosed in E. Kamio et al., Adv. Mater, 29, 1704118 (2017) can be used, for example.

A content of the ionic liquid in the double-network gel is, for example, 50 wt% or more, preferably 60 wt% or more, more preferably 70 wt% or more, and still more preferably 80 wt% or more. The higher the content of the ionic liquid is, the more preferentially the separation functional layer 5 is permeable to the carbon dioxide contained in the gas mixture. The upper limit of the content of the ionic liquid is, for example, but not particularly limited to, 95 wt%.

A content of the first network structure, in the double-network gel, composed mainly of an organic material is, for example, 1 wt% or more, preferably 5 wt% or more, and more preferably 10 wt% or more. The upper limit of the content of the first network structure is 15 wt%, for example. A content of the second network structure, in the double-network gel, composed mainly of an inorganic material is, for example, 1 wt% or more from the viewpoint of improving the strength of the double-network gel. The upper limit of the content of the second network structure is 5 wt%, for example. A ratio of a total weight of the first network structure and the second network structure to a weight of the double-network gel is, for example, 2 wt% or more, preferably 5 wt% or more, and more preferably 10 wt% or more. This ratio is preferably 20 wt% or less. In this embodiment, it is preferable that the separation functional layer 5 substantially consist of the double-network gel.

A thickness of the separation functional layer 5 is, for example, 50 μm or less, preferably 25 μm or less, and more preferably 15 μm or less. In some cases, the thickness of the separation functional layer 5 may be 10 μm or less, 5.0 μm or less, or 2.0 μm or less. The thickness of the separation functional layer 5 may be 0.05 μm or more, or 0.1 μm or more.

<<Intermediate Layer>>

The intermediate layer 6 includes a resin, for example, and may further include nanoparticles dispersed in the resin (matrix). The nanoparticles may be separated from each other or partially aggregate in the matrix. A material of the matrix is not limited to a particular one, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably includes a silicone resin.

The nanoparticles may include an inorganic material or an organic material. The inorganic material included in the nanoparticles is, for example, silica, titania, or alumina. Preferably, the nanoparticles include silica.

A thickness of the intermediate layer 6 is not limited to a particular value, and is, for example, less than 50 μm, preferably 40 μm or less, and more preferably 30 μm or less. The lower limit of the thickness of the intermediate layer 6 is not limited to a particular value, and is 1 μm, for example. The intermediate layer 6 is, for example, a layer having a thickness of less than 50 μm.

<<Porous Support Member>>

The porous support member 7 supports the separation functional layer 5 via the intermediate layer 6. Examples of the porous support member 7 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 7 may be a combination of two or more of these materials.

The porous support member 7 has an average pore diameter of 0.01 to 0.4 μm, for example. A thickness of the porous support member 7 is not limited to a particular value, and is, for example, 10 μm or more, preferably 20 μm or more, and more preferably 50 μm or more. The thickness of the porous support member 7 is, for example, 300 μm or less, preferably 200 μm or less, and more preferably 150 μm or less.

<<Shape of Second Separation Membrane>>

In the present embodiment, the second separation membrane 21 is typically a flat membrane. However, the second separation membrane 21 may have a shape other than a flat membrane, and may be, for example, a hollow fiber membrane.

<<Method for Producing Second Separation Membrane>

The second separation membrane 21 can be produced by the following method, for example. First, a coating liquid containing the material(s) of the intermediate layer 6 is prepared. Next, the coating liquid containing the material(s) of the intermediate layer 6 is applied onto the porous support member 7 to form a coating. The method for applying the coating liquid is not limited to a particular one, and a wire bar, etc. can be used, for example. The thickness of the intermediate layer 6 to be formed can be adjusted by adjusting a wire diameter of the wire bar and a concentration of the material of the intermediate layer 6 in the coating liquid. The coating may be formed by immersing the porous support member 7 in the coating liquid. Next, the coating is dried to form the intermediate layer 6. The coating can be dried under heating conditions, for example. The heating temperature of the coating is 50°C or higher, for example. The heating time of the coating is, for example, 1 minute or more, and may be 5 minutes or more.

An easy-adhesion treatment can be applied onto a surface of the intermediate layer 6 as necessary. As the easy-adhesion treatment, a surface treatment such as application of an undercoat agent, a corona discharge treatment, and a plasma treatment may be applied.

Next, a coating liquid containing the material(s) of the separation functional layer 5 is prepared. The coating liquid containing the material(s) of the separation functional layer 5 is applied onto the intermediate layer 6 to obtain a coating. The coating is dried to form the separation functional layer 5. The method for applying the coating liquid and the drying conditions can be the same as the method and the conditions described above for the intermediate layer 6. The application of the coating liquid containing the material(s) of the separation functional layer 5 may be performed by spin coating. Thus, the second separation membrane 21 can be obtained.

The method for producing the second separation membrane 21 is not limited to the above method. For example, the second separation membrane 21 can also be produced by the following method. For example, the coating liquid containing the material(s) of the separation functional layer 5 is applied onto a transfer film to obtain a coating. The coating is dried to form the separation functional layer 5. Next, the coating liquid containing the material(s) of the intermediate layer 6 is applied onto the separation functional layer 5 and dried to form the intermediate layer 6. A laminate of the intermediate layer 6 and the separation functional layer 5 is transferred to the porous support member 7. Thus, the second separation membrane 21 can be obtained.

The first separation membrane unit 10 and the second separation membrane unit 20 included in the gas separation system 100 are suitable for a flow-type (continuous-type) membrane separation method. However, these separation membrane units may be used for a batch-type membrane separation method.

[Method for Separating Gas Mixture]

In the present embodiment, a method for separating the gas mixture 70 includes a first separation step in which the first separation membrane 11 is used and a second separation step in which the second separation membrane 21 is used. This separation method may further include a recovery step in which each of the first permeated gas 80 obtained by the first separation step and the second permeated gas 90 obtained by the second separation step is recovered.

The first separation step is performed as follows, for example. First, the gas mixture 70 is supplied to the first chamber 13 (the feed-side space) of the first separation membrane unit 10 via the gas mixture feed passage 30. The pressure of the gas mixture 70 is, for example, increased by the pressurizing device 40, and the gas mixture 70 is supplied to the first chamber 13. The pressure of the gas mixture 70 increased by the pressurizing device 40, that is, a pressure in the feed-side space of the first separation membrane unit 10, is, for example, 0.1 MPa or more, and preferably 0.5 MPa or more, and may be 1.0 MPa or more. The upper limit of the pressure of the gas mixture 70 is, for example, but not particularly limited to, 10.0 MPa.

As described above, the gas mixture 70 contains the gas A and the gas B. In one example, the gas A is hydrogen and the gas B is carbon dioxide. In another case, the gas A may be carbon dioxide and the gas B may be hydrogen. The gas mixture 70 is typically an emission gas from a chemical plant, such as an emission gas generated by a shift reaction. It should be noted that the gas separation system 100 of the present embodiment can also be used to separate the gas mixture 70 having a composition other than the above. For example, the gas A or the gas B may be a gas selected from a nonpolar gas such as nitrogen, methane, or oxygen, an inert gas such as helium, and an acid gas other than carbon dioxide. Examples of the acid gas other than carbon dioxide include hydrogen sulfide, carbonyl sulfide, a sulfur oxide $(SO_x)$, hydrogen cyanide, and a nitrogen oxide $(NO_x)$.

A content of the gas A in the gas mixture 70 is, for example, 10 vol% or more, and may be 20 vol% or more, 40 vol% or more, or 50 vol% or more. The upper limit of the content of the gas A in the gas mixture 70 is, for example, but not particularly limited to, 80 vol%. A content of the gas B in the gas mixture 70 is, for example, 10 vol% or more, and may be 20 vol% or more, 40 vol% or more, or 50 vol% or more. The upper limit of the content of the gas B in the gas mixture 70 is, for example, but not particularly limited to, 80 vol%. A ratio of a volume of the gas A to a sum of the volume of the gas A and a volume of the gas B in the gas mixture 70 is not limited to a particular ratio, and is, for example, 20 to 80 vol%. In the present description, the terms "content" and "volume" each refers to a value under the standard conditions (0°C, 101 kPa) unless otherwise specified.

The gas mixture 70 supplied to the first chamber 13 of the first separation membrane unit 10 is separated into the first permeated gas 80 and the first non-permeated gas 81 by the first separation membrane 11. Thereby, the first permeated gas 80 is supplied to the second chamber 14. The first permeated gas 80 supplied to the second chamber 14 is discharged to an outside of the first separation membrane unit 10 via the outlet 14a. The first permeated gas 80 is delivered to the first recovery portion 42 via the first recovery passage 34. The first permeated gas 80 can be recovered in the first recovery portion 42.

As described above, the first separation membrane 11 of the first separation membrane unit 10 is preferentially permeable to the gas A contained in the gas mixture 70. Therefore, the first permeated gas 80 obtained in the first separation membrane unit 10 has a content of the gas A higher than that in the gas mixture 70. The content (recovery purity) of the gas A in the first permeated gas 80 is, for example, 80 vol% or more, and may be 83 vol% or more, 85 vol% or more, 88 vol% or more, or even 90 vol% or more. The upper limit of the content of the gas A in the first permeated gas 80 is, for example, but not particularly limited to, 99 vol% or less, and may be 95 vol% or less. A recovery rate of the gas A by the first permeated gas 80 is, for example, 70 wt% or more, and may be 73 wt% or more, 75 wt% or more, or even 78 wt% or more. The upper limit of the recovery rate of the gas A by the first permeated gas 80 is, for example, but not particularly limited to, 90 wt% or less, and may be 85 wt% or less. In the present description, the term "recovery rate" means a ratio of a weight of a particular gas recovered to a weight of the particular gas contained in the gas mixture. The term "weight" refers to a value under the standard conditions (0°C, 101 kPa).

A concentration of the gas B in the gas mixture 70 gradually increases from the inlet 13a toward the outlet 13b in the first chamber 13. A content of the gas B in the gas mixture 70 (the first non-permeated gas 81) processed in the first chamber 13 is, for example, but not particularly limited to, 25 to 75 vol%. The first non-permeated gas 81 is discharged to the outside of the first separation membrane unit 10 via the outlet 13b. The first non-permeated gas 81 is supplied to the second separation membrane unit 20 via the non-permeated gas feed passage 32.

The second separation step is performed as follows, for example. First, the first non-permeated gas 81 is supplied to the third chamber 23 (the feed-side space) of the second separation membrane unit 20 via the non-permeated gas feed passage 32. The first non-permeated gas 81 has, for example, a pressure equivalent to that of the gas mixture 70 supplied to the first separation membrane unit 10. The pressure of the first non-permeated gas 81, that is, a pressure in the feed-side space of the second separation membrane unit 20, is, for example, 0.1 MPa or more, and preferably 0.5 MPa or more, and may be 1.0 MPa or more. The upper limit of the pressure of the first non-permeated gas 81 is, for example, but not particularly limited to, 10.0 MPa.

The first non-permeated gas 81 supplied to the third chamber 23 of the second separation membrane unit 20 is separated into the second permeated gas 90 and the second non-permeated gas 91 by the second separation membrane 21. Thereby, the second permeated gas 90 is supplied to the fourth chamber 24. The second permeated gas 90 supplied to the fourth chamber 24 is discharged to an outside of the second separation membrane unit 20 via the outlet 24a. The second permeated gas 90 is delivered to the second recovery portion 44 via the second recovery passage 36. The second permeated gas 90 can be recovered in the second recovery portion 44.

As described above, the second separation membrane 21 of the second separation membrane unit 20 is preferentially permeable to the gas B contained in the first non-permeated gas 81. Therefore, the second permeated gas 90 obtained in the second separation membrane unit 20 has a content of the gas B higher than that in the first non-permeated gas 81. A content (recovery purity) of the gas B in the second permeated gas 90 is, for example, 80 vol% or more, and may be 85 vol% or more, 88 vol% or more, 90 vol% or more, 93 vol% or more, or even 95 vol% or more. The upper limit of the content of the gas B in the second permeated gas 90 is, for example, but not particularly limited to, 99 vol% or less. A recovery rate of the gas B by the second permeated gas 90 is, for example, 70 wt% or more, and may be 75 wt% or more, 80 wt% or more, 83 wt% or more, or even 85 wt% or more. The upper limit of the recovery rate of the gas B by the second permeated gas 90 is, for example, but not particularly limited to, 99 wt% or less, and may be 95 wt% or less.

A concentration of the gas A in the first non-permeated gas 81 gradually increases from the inlet 23a toward the outlet 23b in the third chamber 23. A content of the gas A in the first non-permeated gas 81 (the second non-permeated gas 91) processed in the third chamber 23 is, for example, but not particularly limited to, 50 vol% to 90 vol%. A recovery rate of the gas A by the second non-permeated gas 91 is, for example, but not particularly limited to, 5 wt% to 30 wt%.

The second non-permeated gas 91 is discharged to the outside of the second separation membrane unit 20 via the outlet 23b. The second non-permeated gas 91 is delivered to the first recovery passage 34 via the discharge passage 38. The second non-permeated gas 91 is mixed with the first permeated gas 80 in the first recovery passage 34, and the mixture is delivered to the first recovery portion 42. In the gas separation system 100 of the present embodiment, the second non-permeated gas 91 can be recovered in the first recovery portion 42 together with the first permeated gas 80.

A content (recovery purity) of the gas A in the recovered gas containing the mixture of the first permeated gas 80 and the second non-permeated gas 91 is, for example, 75 vol% or more, and may be 80 vol% or more, 83 vol% or more, or even 85 vol% or more. The upper limit of the content of the gas A in the recovered gas is, for example, but not particularly limited to, 95 vol% or less, and may be 90 vol% or less. A recovery rate of the gas A by the recovered gas is, for example, 80 wt% or more, and may be 85 wt% or more, 90 wt% or more, 93 wt% or more, or even 95 wt% or more. The upper limit of the recovery rate of the gas A by the recovered gas is, for example, but not particularly limited to, 99 wt% or less.

In the separation method of the present embodiment, the first separation step and the second separation step are performed successively, for example. That is, the first non-permeated gas 81 separated by the first separation step is immediately supplied to the second separation step without being collected into, for example, a tank. Performing the first separation step and the second separation step successively makes it possible to easily increase an amount of the gas mixture 70 to be processed per unit time.

In the case where the gas mixture is separated using a conventional gas separation system including only one separation membrane, the membrane area of the separation membrane needs to be adjusted to a very high value to achieve a high recovery rate and a high recovery purity, and that greatly increases the manufacturing cost. In the case of a gas separation system in which the gas mixture is processed in a first separation membrane and the resulting permeated gas is further processed in a second separation membrane, an extra pressurizing device is needed for pressurizing the permeated gas and power needed to operate the system tends to increase.

The configuration of the gas separation system 100 of the present embodiment tends to allow recovery of each of the gas A and the gas B at a sufficiently high recovery rate and a sufficiently high recovery purity without greatly increasing the sum of the membrane area of the first separation membrane 11 and the membrane area of the second separation membrane 21 while suppressing power needed to operate the system. Accordingly, the gas separation system 100 of the present embodiment is suitable for separating the gas mixture efficiently.

[Modification of First Separation Membrane Unit]

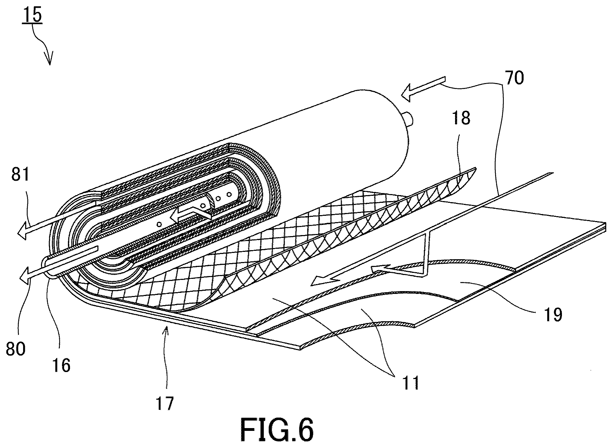

In the gas separation system 100, the first separation membrane unit 10 may be a spiral membrane element, a hollow fiber membrane element, or the like. FIG. 6 shows a spiral membrane element. A first separation membrane unit 15 of FIG. 6 includes a central tube 16 and a laminate 17. The laminate 17 includes the first separation membrane 11.

The central tube 16 has a cylindrical shape. The central tube 16 has a surface with a plurality of holes or slits to allow the first permeated gas 80 to flow into the central tube 16. Examples of a material of the central tube 16 include: a resin such as an acrylonitrile-butadiene-styrene copolymer resin (ABS resin), a polyphenylene ether resin (PPE resin), or a polysulfone resin (PSF resin); and a metal such as stainless steel or titanium. The central tube 16 has an inner diameter in a range of, for example, 20 to 100 mm.

The laminate 17 further includes a feed-side flow passage material 18 and a permeation-side flow passage material 19 in addition to the first separation membrane 11. The laminate 17 is wound around the central tube 16. The first separation membrane unit 15 may further include an exterior material (not shown).

As the feed-side flow passage material 18 and the permeation-side flow passage material 19, a resin net, woven fabric, or knitted fabric formed of polyethylene, polypropylene, polyethylene terephthalate (PET), polyphenylene sulfide (PPS), or an ethylene-chlorotrifluoroethylene copolymer (ECTFE) can be used, for example.

Membrane separation using the first separation membrane unit 15 is performed by the following method, for example. First, the gas mixture 70 is supplied to one end of the wound laminate 17. The first permeated gas 80 having permeated through the first separation membrane 11 of the laminate 17 thereby moves into the central tube 16. The first permeated gas 80 is discharged outside via the central tube 16. The gas mixture 70 (the first non-permeated gas 81) processed in the first separation membrane unit 15 is discharged outside from the other end of the wound laminate 17.

In the gas separation system 100, the second separation membrane unit 20 may also be a spiral membrane element, a hollow fiber membrane element, or the like. In one example, the second separation membrane unit 20 may be a spiral membrane element having the same configuration as that of the first separation membrane unit 15.

<Modification of Gas Separation System>

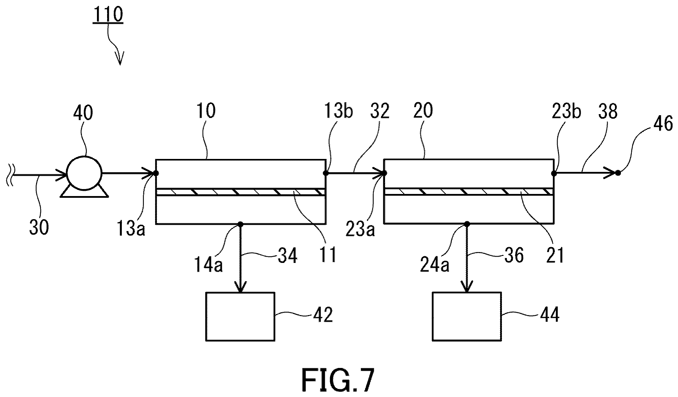

FIG. 7 is a schematic configuration diagram showing a gas separation system 110 according to a modification. As shown in FIG. 7, in the gas separation system 110, the discharge passage 38 does not join the first recovery passage 34. Except for this, the structure of the gas separation system 110 of the present embodiment is the same as that of the gas separation system 100. Therefore, the elements common between the gas separation system 100 and the gas separation system 110 of the present embodiment are denoted by the same reference characters, and the descriptions of such elements may be omitted. That is, the description of each embodiment is applicable to the other, unless there is technical inconsistency.

In the gas separation system 110, the discharge passage 38 is provided with an opening (a discharge outlet 46) for discharging the second non-permeated gas from the discharge passage 38. The gas separation system 110 does not recover but discards the second non-permeated gas, for example. The gas separation system 110 tends to be able to recover the gas A at a higher recovery purity.

EXAMPLES

Hereinafter, the present invention will be described in more detail by way of examples, but the present invention is not limited to these examples.

(Calculation Example 1)

The operation of the gas separation system as shown in FIG. 1 was simulated using Symmetry, a process modeling software available from Schlumberger Ltd. Specifically, it was assumed that a hydrogen permeable membrane was used as the first separation membrane (hydrogen as the gas A) and a carbon dioxide permeable membrane was used as the second separation membrane (carbon dioxide as the gas B) in the gas separation system as shown in FIG. 1. The separation factor $\alpha 1$ of the hydrogen permeable membrane for hydrogen with respect to carbon dioxide was set to 20, and the membrane area M1 was set to 664 $m^2$. The separation factor $\alpha 2$ of the carbon dioxide permeable membrane for carbon dioxide with respect to hydrogen was set to 5, and the membrane area M2 was set to 336 $m^2$. In addition, the conditions for supplying the gas mixture were set as follows. Note that it was assumed that the pressure of the gas mixture was increased from an atmospheric pressure (101.33 kPa) in an external environment to 0.9 MPa by the pressurizing device provided to the gas mixture feed passage.

[Conditions for Supplying Gas Mixture]
Flow rate: 1016.47 $Nm^3$/hr
Composition (volume ratio): $CO_2/H_2$ = 50/50
Weight of $CO_2$: 1000 kg/hr
Weight of $H_2$: 45.81 kg/hr
Pressure: 0.9 MPa
Temperature: 25°C

The separation membrane 11 as shown in FIG. 3 was assumed as the hydrogen permeable membrane of Calculation Example 1. Specifically, the separation membrane 11 including not only the resin layer including a polyamide resin as the separation functional layer 1 but the coat layer 2 including a silicone-based polymer was assumed. It should be noted that the same separation membrane as in Calculation Example 1 was assumed as the hydrogen permeable membrane in each Calculation Example described later, unless otherwise described.

Through the simulation of Calculation Example 1, compositions of the first permeated gas, the second permeated gas, and the second non-permeated gas in the case of separating the gas mixture using the gas separation system gas were calculated. For hydrogen and carbon dioxide, the recovery rate and the recovery purity were calculated from the calculation results. Furthermore, energy (compression energy) (MWh) needed to operate the pressurizing device was calculated, and compression energy (MWh/t) per ton of hydrogen contained in the recovered gas and compression energy (MWh/t) per ton of carbon dioxide contained in the second permeated gas were determined.

(Calculation Examples 2 to 8)

Calculation Examples 2 to 8 were simulated in the same manner as in Calculation Example 1, except that the separation factors $\alpha 1$ and $\alpha 2$ were changed as shown in Table 1. The separation membrane 11 including the metal layer as the separation functional layer 1 was assumed as the hydrogen permeable membrane of Calculation Example 3.

(Calculation Example 9)

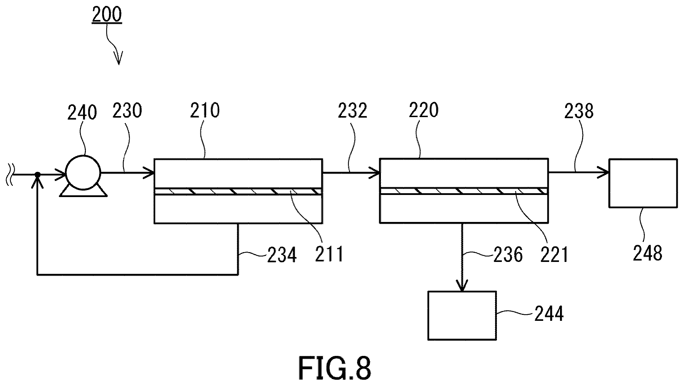

The operation of a gas separation system 200 as shown in FIG. 8 was simulated using Symmetry, a process modeling software available from Schlumberger Ltd. The gas separation system 200 includes a first separation membrane unit 210 accommodating a first separation membrane 211 and a second separation membrane unit 220 accommodating a second separation membrane 221. The first separation membrane 211 and the second separation membrane 221 correspond respectively to the first separation membrane 11 and the second separation membrane 21 of the gas separation system 100 in FIG. 1.

The gas separation system 200 includes a gas mixture feed passage 230, a non-permeated gas feed passage 232, a recycle passage 234, a second recovery passage 236, a second recovery portion 244, a third recovery passage 238, and a third recovery portion 248. The gas mixture feed passage 230 is a passage for supplying the gas mixture to the first separation membrane unit 210. The gas mixture feed passage 230 is provided with a pressurizing device 240 that increases the pressure of the gas mixture.

The non-permeated gas feed passage 232 is a passage connected to a non-permeated gas outlet of the first separation membrane unit 210 and a non-permeated gas inlet of the second separation membrane unit 220 and configured to supply the non-first permeated gas from the first separation membrane unit 210 to the second separation membrane unit 220.

The recycle passage 234 is a passage connected to a permeated gas outlet of the first separation membrane unit 210 and the gas mixture feed passage 230 and configured to lead the first permeated gas from the first separation membrane unit 210 back to the gas mixture feed passage 230.

The second recovery passage 236 is a passage connected to a permeated gas outlet of the second separation membrane unit 220 and the inlet of the second recovery portion 244 and configured to deliver the second permeated gas from the second separation membrane unit 220 to the second recovery portion 244.

The third recovery passage 238 is a passage connected to the non-permeated gas outlet of the second separation membrane unit 220 and an inlet of the third recovery portion 248 and configured to deliver the second non-permeated gas from the second separation membrane unit 220 to the third recovery portion 248.

Calculation Example 9 was simulated in the same manner as in Calculation Example 8, except that the gas separation system 200 was used.

(Calculation Examples 10 to 12)

Calculation Examples 10 to 12 were simulated in the same manner as in Calculation Example 1, except that the separation factors $\alpha 1$ and $\alpha 2$ were changed as shown in Table 1.

[Table 1]

| Calculation Example | First separation membrane | Second separation membrane | Separation factor | | | Sum M1+M2 | Membrane area | | |
|---|---|---|---|---|---|---|---|---|---|
| | | | First separation membrane $\alpha 1$ ($H_2/CO_2$) | Second separation membrane $\alpha 2$ ($CO_2/H_2$) | $\alpha 1/\alpha 2$ | | First separation membrane M1 (m²) | Second separation membrane M2 (m²) | M1/M2 |
| 1 | $H_2$ permeable membrane | $CO_2$ permeable membrane | 20 | 5 | 4.0 | 1000 | 664 | 336 | 2 |
| 2 | $H_2$ permeable membrane | $CO_2$ permeable membrane | 40 | 10 | 4.0 | 1000 | 664 | 336 | 2 |
| 3 | $H_2$ permeable membrane | $CO_2$ permeable membrane | 80 | 20 | 4.0 | 1000 | 664 | 336 | 2 |
| 4 | $H_2$ permeable membrane | $CO_2$ permeable membrane | 20 | 10 | 2.0 | 1000 | 664 | 336 | 2 |
| 5 | $H_2$ permeable membrane | $CO_2$ permeable membrane | 40 | 20 | 2.0 | 1000 | 664 | 336 | 2 |
| 6 | $H_2$ permeable membrane | $CO_2$ permeable membrane | 10 | 10 | 1.0 | 1000 | 664 | 336 | 2 |
| 7 | $H_2$ permeable membrane | $CO_2$ permeable membrane | 10 | 20 | 0.5 | 1000 | 664 | 336 | 2 |
| 8 | $H_2$ permeable membrane | $CO_2$ permeable membrane | 10 | 40 | 0.25 | 1000 | 664 | 336 | 2 |
| 9 (*1) | $H_2$ permeable membrane | $CO_2$ permeable membrane | 10 | 40 | 0.25 | 1000 | 664 | 336 | 2 |
| 10 | $H_2$ permeable membrane | $CO_2$ permeable membrane | 22 | 10.5 | 2.0 | 1000 | 664 | 336 | 2 |

| | | First separation membrane | Second separation membrane | Separation factor | | | Membrane area | | | |
|---|---|---|---|---|---|---|---|---|---|---|
| | | | | First separation membrane $\alpha 1$ ($H_2/CO_2$) | Second separation membrane $\alpha 2$ ($CO_2/H_2$) | $\alpha 1/\alpha 2$ | Sum M1+M2 | First separation membrane M1 ($m^2$) | Second separation membrane M2 ($m^2$) | M1/M2 |
| | 11 | $H_2$ permeable membrane | $CO_2$ permeable membrane | 10.9 | 10.9 | 1.0 | 1000 | 664 | 336 | 2 |
| | 12 | $H_2$ permeable membrane | $CO_2$ permeable membrane | 7.35 | 14.7 | 0.5 | 1000 | 664 | 336 | 2 |

(*1) Simulation results for the operation of the gas separation system 200 of FIG. 8

[Table 2]

| | | Second permeated gas | | Second non-permeated gas | | First permeated gas | | Recovered gas (*2) | | Power for recovery | |
|---|---|---|---|---|---|---|---|---|---|---|---|
| | | $CO_2$ recovery rate (wt%) | $CO_2$ recovery purity (vol%) | $H_2$ recovery rate (wt%) | $H_2$ recovery purity (vol%) | $H_2$ recovery rate (wt%) | $H_2$ recovery purity (vol%) | $H_2$ recovery rate (wt%) | $H_2$ recovery purity (vol%) | $H_2$ (MWh/t) (*3) | $CO_2$ (MWh/t) (*4) |
| Calculation Example | 1 | 86.0 | 88.4 | 10.8 | 71.7 | 78.0 | 88.4 | 88.8 | 86.0 | 3.16 | 0.150 |
| | 2 | 84.8 | 93.7 | 18.3 | 64.6 | 76.0 | 93.7 | 94.3 | 86.2 | 2.98 | 0.152 |
| | 3 | 84.1 | 96.7 | 22.3 | 62.5 | 74.9 | 86.7 | 97.2 | 85.9 | 2.89 | 0.153 |
| | 4 | 82.7 | 93.4 | 16.1 | 69.9 | 78.0 | 88.4 | 94.1 | 84.6 | 2.98 | 0.155 |
| | 5 | 83.3 | 96.6 | 21.1 | 64.7 | 76.0 | 93.7 | 97.1 | 83.4 | 2.89 | 0.154 |
| | 6 | 77.2 | 92.3 | 12.2 | 81.5 | 81.3 | 80.2 | 93.5 | 80.4 | 3.00 | 0.167 |
| | 7 | 75.9 | 95.9 | 15.4 | 79.2 | 81.3 | 80.2 | 96.7 | 80.1 | 2.90 | 0.170 |
| | 8 | 75.2 | 97.8 | 17.0 | 78.1 | 81.3 | 80.2 | 98.3 | 79.8 | 2.86 | 0.171 |
| | 9 (*1) | 49.9 | 95.6 | 97.7 | 66.1 | - | - | 97.7 | 66.1 | 2.88 | 0.258 |
| | 10 | 82.9 | 93.7 | 16.6 | 69.3 | 77.9 | 88.9 | 94.4 | 84.7 | 2.97 | 0.155 |
| | 11 | 78.8 | 93.7 | 14.4 | 77.2 | 80.4 | 82.6 | 94.7 | 81.7 | 2.97 | 0.163 |
| | 12 | 71.2 | 93.7 | 17.0 | 78.1 | 83.4 | 75.5 | 95.2 | 76.8 | 2.95 | 0.181 |

(*1) Simulation results for the operation of the gas separation system 200 of FIG. 8
(*2) The gas containing the mixture of the first permeated gas and the second non-permeated gas
(*3) Compression energy (MWh/t) needed to operate the pressurizing device per ton of $H_2$ contained in the recovered gas
(*4) Compression energy (MWh/t) needed to operate the pressurizing device per ton of $CO_2$ contained in the second permeated gas

As can be seen from Tables 1 and 2, in Calculation Examples 1 to 5 and 10 where the gas separation system of the present embodiment in which the ratio ($\alpha 1/\alpha 2$) of the separation factor $\alpha 1$ of the first separation membrane to the separation factor $\alpha 2$ of the second separation membrane is 1.9 or more was used, the gas mixture was successfully separated at a sufficiently high recovery rate and a sufficiently high recovery purity, compared to other Calculation Examples, even when the separation factor $\alpha 2$ of the second separation membrane is as small as 50 or less (especially 20 or less). In particular, in Calculation Examples 1 to 5 and 10, the recovery rate of the gas B (carbon dioxide) by the second permeated gas was high.

INDUSTRIAL APPLICABILITY

The gas separation system of the present embodiment is suitable for separating a gas mixture, such as a gas mixture containing carbon dioxide and hydrogen. In particular, the gas separation system of the present embodiment is suitable for processing off-gases from chemical plants.

**Claims**

1. A gas separation system comprising:

   a first separation membrane that separates a gas mixture into a first permeated gas and a first non-permeated gas; and
   a second separation membrane that separates the first non-permeated gas into a second permeated gas and a second non-permeated gas, wherein
   the gas mixture contains a gas A and a gas B different from the gas A,
   the first separation membrane is preferentially permeable to the gas A,
   the second separation membrane is preferentially permeable to the gas B,
   a separation factor $\alpha 1$ of the first separation membrane for the gas A with respect to the gas B and a separation factor $\alpha 2$ of the second separation membrane for the gas B with respect to the gas A satisfy the following relational expressions (1) and (2), the separation factors $\alpha 1$ and $\alpha 2$ being determined by a test below:

$$\alpha 1/\alpha 2 \geq 1.9 \qquad (1);$$

   and

$$\alpha 2 \leq 50 \qquad (2).$$

   Test: A test piece is fabricated from the first separation membrane or the second separation membrane. An operation is performed in which a test gas composed of the gas A and the gas B is supplied to a space adjacent to one surface of the test piece while a space adjacent to the other surface of the test piece is depressurized. The separation factor $\alpha 1$ or $\alpha 2$ is determined on the basis of a result of the operation. In the operation, a content of the gas A in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

2. The gas separation system according to claim 1, wherein the separation factor $\alpha 2$ is 20 or less.

3. The gas separation system according to claim 1, wherein the gas A is hydrogen and the gas B is carbon dioxide.

4. The gas separation system according to claim 1 configured to recover each of the first permeated gas and the second permeated gas.

5. The gas separation system according to claim 1, wherein a membrane area of the first separation membrane is larger than a membrane area of the second separation membrane.

6. The gas separation system according to claim 1, wherein

a content of the gas A in the first permeated gas is 85 vol% or more, and
a recovery rate of the gas A by the first permeated gas is 70 wt% or more.

7. The gas separation system according to claim 1, wherein

a content of the gas B in the second permeated gas is 85 vol% or more, and
a recovery rate of the gas B by the second permeated gas is 80 wt% or more.

8. The gas separation system according to claim 1, wherein a ratio of a volume of the gas A to a sum of the volume of the gas A and a volume of the gas B in the gas mixture is 20 to 80 vol%.

9. The gas separation system according to claim 1, further comprising:

a first separation membrane unit accommodating the first separation membrane;
a gas mixture feed passage connected to the first separation membrane unit and configured to supply the gas mixture to the first separation membrane unit; and
a pressurizing device provided to the gas mixture feed passage and configured to increase a pressure of the gas mixture.

10. The gas separation system according to claim 1, further comprising:

a first separation membrane unit accommodating the first separation membrane;
a first recovery portion that recovers the first permeated gas; and
a first recovery passage connected to the first separation membrane unit and the first recovery portion and configured to deliver the first permeated gas to the first recovery portion.

11. The gas separation system according to claim 10, further comprising:

a second separation membrane unit accommodating the second separation membrane; and
a discharge passage connected to the second separation membrane unit and configured to discharge the second non-permeated gas from the second separation membrane unit, wherein
the discharge passage joins the first recovery passage at a joining point.

12. The gas separation system according to claim 1, further comprising:

a second separation membrane unit accommodating the second separation membrane;
a second recovery portion that recovers the second permeated gas; and
a second recovery passage connected to the second separation membrane unit and the second recovery portion and configured to deliver the second permeated gas to the second recovery portion.

13. The gas separation system according to claim 1, wherein the first separation membrane includes a resin layer including a resin or a metal layer including a metal as a separation functional layer.

14. The gas separation system according to claim 1, wherein the second separation membrane includes a separation functional layer including: a polyether block amide resin; or an ionic liquid.

15. A gas mixture separation method, comprising:

a first separation step of separating, by a first separation membrane preferentially permeable to a gas A, a gas mixture containing the gas A and a gas B different from the gas A into a first permeated gas and a first non-permeated gas; and
a second separation step of separating, by a second separation membrane preferentially permeable to the gas B, the first non-permeated gas into a second permeated gas and a second non-permeated gas, wherein
a separation factor $\alpha 1$ of the first separation membrane for the gas A with respect to the gas B and a separation factor $\alpha 2$ of the second separation membrane for the gas B with respect to the gas A satisfy the following relational expressions (1) and (2), the separation factors $\alpha 1$ and $\alpha 2$ being determined by a test below:

$$\alpha 1/\alpha 2 \geq 1.9 \qquad (1);$$

and

$$\alpha 2 \leq 50 \qquad (2).$$

Test: A test piece is fabricated from the first separation membrane or the second separation membrane. An operation is performed in which a test gas composed of the gas A and the gas B is supplied to a space adjacent to one surface of the test piece while a space adjacent to the other surface of the test piece is depressurized. The separation factor $\alpha 1$ or $\alpha 2$ is determined on the basis of a result of the operation. In the operation, a content of the gas A in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

FIG.1

10

13a   70   13   13b   81

11

14a   80   14   12

FIG.2

FIG.3

<u>20</u>

23a    81    23    23b    91

21

24a    90    24    22

FIG.4

21  21a

5
6
7

21b

# FIG.5

15

70

18

81

80

16

17

11

19

FIG.6

FIG.7

FIG.8

# EP 4 670 822 A1

## INTERNATIONAL SEARCH REPORT

| | International application No. |
|---|---|
| | **PCT/JP2024/005870** |

### A. CLASSIFICATION OF SUBJECT MATTER

***B01D 53/22***(2006.01)i; ***B01D 69/00***(2006.01)i; ***B01D 69/02***(2006.01)i; ***B01D 71/02***(2006.01)i; ***B01D 71/06***(2006.01)i; ***B01D 71/52***(2006.01)i; ***B01D 71/56***(2006.01)i

FI: B01D53/22; B01D69/00 500; B01D69/02; B01D71/02 500; B01D71/06; B01D71/52; B01D71/56

According to International Patent Classification (IPC) or to both national classification and IPC

### B. FIELDS SEARCHED

Minimum documentation searched (classification system followed by classification symbols)

B01D61/00-71/82, B01D53/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2009/017054 A1 (NIPPON OIL CORPORATION) 05 February 2009 (2009-02-05) claim 2, paragraphs [0098]-[0129], [0194]-[0203], fig. 4 | 1-10, 12-13, 15 |
| Y | | 11, 14 |
| Y | WO 2022/149318 A1 (NGK INSULATORS LTD.) 14 July 2022 (2022-07-14) paragraphs [0033]-[0049], fig. 1 | 11 |
| Y | JP 2-21920 A (GKSS FORSCHUNGSZENTRUM GEESTHACHT GMBH) 24 January 1990 (1990-01-24) p. 4, lower right column, lines 3-20, fig. 3 | 11 |
| Y | JP 2020-163375 A (NITTO DENKO CORPORATION) 08 October 2020 (2020-10-08) claims 10-11 | 14 |
| A | US 2022/0062815 A1 (KOREA RESEARCH INSTITUTE OF CHEMICAL TECHNOLOGY) 03 March 2022 (2022-03-03) | 1-15 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

33

**INTERNATIONAL SEARCH REPORT**
Information on patent family members

International application No.

**PCT/JP2024/005870**

| Patent document cited in search report | | | Publication date (day/month/year) | Patent family member(s) | | | Publication date (day/month/year) |
|---|---|---|---|---|---|---|---|
| WO | 2009/017054 | A1 | 05 February 2009 | US | 2010/0260657 | A1 | |
| | | | | claim 2, paragraphs [0165]-[0196], [0262]-[0270], fig. 4 | | | |
| | | | | AU | 2008283409 | A1 | |
| | | | | CN | 101765559 | A | |
| | | | | EP | 2181962 | A1 | |
| | | | | JP | 2009-29674 | A | |
| WO | 2022/149318 | A1 | 14 July 2022 | US | 2023/0330594 | A1 | |
| | | | | paragraphs [0041]-[0057], fig. 1 | | | |
| | | | | CN | 116528962 | A | |
| | | | | DE | 112021006764 | T5 | |
| JP | 2-21920 | A | 24 January 1990 | US | 4994094 | A | |
| | | | | colun 5, line 60 to column 6, line 14, fig. 3 | | | |
| | | | | CA | 1335491 | C | |
| | | | | CN | 1035625 | A | |
| | | | | DE | 3806107 | A1 | |
| | | | | DK | 85789 | A | |
| | | | | EP | 329962 | A2 | |
| | | | | ES | 2056964 | T3 | |
| JP | 2020-163375 | A | 08 October 2020 | US | 2022/0161185 | A1 | |
| | | | | claims 10-11 | | | |
| | | | | CN | 113631245 | A | |
| | | | | EP | 3950102 | A1 | |
| | | | | KR | 10-2021-0141530 | A | |
| | | | | WO | 2020/195911 | A1 | |
| US | 2022/0062815 | A1 | 03 March 2022 | KR | 10-2224079 | B1 | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008260739 A

**Non-patent literature cited in the description**

- **E. KAMIO et al.** *Adv. Mater*, 2017, vol. 29, 1704118